# EUROPÄISCHE PATENTSCHRIFT

(11) **EP 1 803 663 B1**
(45) Veröffentlichungstag und Bekanntmachung des Hinweises auf die Patenterteilung: **11.06.2008**
(21) Anmeldenummer: 05028688.9
(22) Anmeldetag: 29.12.2005
(51) Int. Cl.: B65G 1/08, B65G 47/88

(54) **Auslösevorrichtung mit motor-geführter Sperre für einen Stückgüter-Lagerschacht**
Dispensing device for articles stacked in magazines having a motor-driven stop
Dispositif pour décharger des articles empilés dans des magasins comportent un arrêt entrainé par un moteur

(43) Veröffentlichungstag der Anmeldung: 04.07.2007
(73) Patentinhaber: Rowa Automatisierungssysteme GmbH & Co. KG, 53539 Kelberg (DE)
(72) Erfinder: Gross, Dietmar, 53539 Kelberg (DE)
(74) Vertreter: Schmidt, Frank-Michael

(56) Entgegenhaltungen:
- EP-A- 0 531 774
- EP-A- 1 275 597
- DE-A1- 2 835 404
- NL-C2- 1 023 154
- US-A- 2 353 394
- US-A- 4 004 701

## Beschreibung

Die Erfindung betrifft eine Auslösevorrichtung zum Freigeben oder Sperren der Ausgabe wenigstens eines Stückguts aus einem Lagerschacht, der mehrere hintereinander liegende Stückgüter aufnehmen kann, die entlang einer Längsrichtung des Lagerschachts bewegt werden können, wobei sich die Auslösevorrichtung an demjenigen Ende des Lagerschachts befindet, an der das wenigstens eine Stückgut ausgegeben werden soll, wobei die Auslösevorrichtung eine aus dem Lagerschacht herausfahrbare bzw. wieder in den Lagerschacht hineinfahrbare Sperre aufweist. Bei einer anderen Ausführungsform weist die Auslösevorrichtung eine den Lagerschacht unten begrenzende Barriere, die ein Weiterrutschen des anliegenden Stückguts verhindert, und eine in den Lagerschacht hineinfahrbare und wieder aus dem Lagerschacht herausfahrbare Hebeeinrichtung zum Heben eines anliegenden Stückguts über die Barriere auf. Ferner betrifft die Erfindung ein Lager zum Lagern von Stückgütern mit einer Vielzahl von Lagerschächten sowie ein Verfahren zum Ausgeben wenigstens eines Stückguts aus einem Lagerschacht.

Auslösevorrichtungen der eingangs genannten Arten werden beispielsweise in Lageranordnungen eingesetzt, die eine Vielzahl geneigter Lagerschächte aufweisen. Die geneigten Lagerschächte enthalten jeweils einen Stapel mehrerer hintereinander angeordneter Stückgüter (vorzugsweise quaderförmige Pakkungen), welche bei Freigabe einer am unteren Ende des Lagerschachts angeordneten sperre den Lagerschacht hinabrutschen. Derartige Lagerschächte werden beispielsweise zum Lagern von häufig und/oder in größerer Anzahl benötigten Arzneimittelpakkungen in Apotheken oder im Versandhandel eingesetzt. Ein Lager zum Lagern von Arzneimittelpackungen in geneigten Lagerschächten ist beispielsweise aus der Druckschrift WO 03/010073 A1 bekannt.

Bei den bekannten Stückgutlagern mit Lagerschächten sind üblicherweise eine Vielzahl von Lagerschächten unterschiedlicher Breite vorgesehen, wobei jeder Lagerschacht eine Vielzahl gleichartiger Packungen, d.h. Packungen gleicher Abmessungen und gleichen Gewichts, aufnehmen kann. Zur Entnahme derartiger Packungen aus den Schächten gibt es grundsätzlich zwei Arten von Auslösevorrichtungen: passive und aktive. Bei geneigten Lagerschächten mit passiver Auslösevorrichtung oder Sperre erfolgt die Freigabe mit Hilfe eines Bediengeräts, welches vor dem unteren Ende des geneigten Lagerschachts positioniert wird, dort die Sperre zur Freigabe betätigt und die austretende(n) Packung(en) aufnehmen kann. Im einfachsten Fall besteht die sich an dem Lagerschacht befindende passive Sperre aus einer ausgehend vom Boden des Lagerschachts nach oben in den Lagerschacht hineinragenden Wandung oder einem in den Lagerschacht hineinragenden Finger, wobei zur Ausgabe des Stückguts das jeweilige Stückgut von dem Bediengerät über die Wandung bzw. den Finger hinaus angehoben wird, und vom Eigengewicht und Gewicht nachfolgender Packungen herausgedrückt wird. Die passiven Auslösevorrichtungen erfordern in der Regel komplizierte Bewegungsabläufe des entnehmenden Bediengeräts und eine entsprechende Steuerung und gestatten bei verwendung nur eines Bediengeräts die Ausgabe von Stückgütern jeweils nur an einem Lagerschacht, was die Ausgabezeiten erheblich verlängert.

Bei den aktiven Auslösevorrichtungen weist jeder Lagerschacht einen eigenen Auslösemechanismus auf, der die Freigabe einer das Hinausrutschen der Stückgüter verhindernden Sperre ermöglicht. Die austretenden Stückgüter fallen üblicherweise auf eine Transporteinrichtung (z.B. Förderband), die so angeordnet ist, daß die Stückgüter aus mehreren Lagerschächten gleichzeitig austreten können. Als aktive Auslösevorrichtungen werden üblicherweise mechanisch aus dem Lagerschacht herausfahrbare bzw. in den Lagerschacht hineinfahrbare Sperren (beispielsweise Finger) verwendet, die beispielsweise mit Hilfe eines Elektromagneten aus dem Lagerschacht herausgezogen und mit Hilfe einer Rückstellfeder in den Lagerschacht zurückbewegt werden, wie z.B. aus der DE 28 35 404 A1 bekannt. Auch ist die verwendung von Drähten aus einer Formgedächtnislegierung bekannt, bei denen sich infolge eines Hindurchleitens eines Stroms durch den Draht der Draht sprunghaft verformt (zusammenzieht) und dabei eine Sperre betätigt. Bei diesen bekannten Auslösemechanismen ist der Zeitpunkt, zu welchem die Sperre nach dem Herausfahren aus dem Lagerschacht wieder in den Lagerschacht hineingefahren wird, sorgfältig zu wählen. Wird die Sperre zu früh wieder in den Lagerschacht hineingefahren, so kann es vorkommen, daß die Packung, die sich noch am Ort der Sperre befindet, nicht weiter aus dem Lagerschacht hinausrutscht. Wird die Sperre zu spät wieder in den Lagerschacht hineinbewegt, so kann es vorkommen, daß auch eine nachfolgende Packung durchrutscht. Darüber hinaus kann es bei Sperren, die allein durch eine Federkraft in den Lagerschacht zurückgestellt werden, vorkommen, daß die Sperre beim Nachrutschen einer nachfolgenden schweren Packung nachgibt, so daß auch die weitere Packung durchrutscht.

Die genannten Probleme verstärken sich dann, wenn in Lagerschächten Packungen unterschiedlicher Größe und unterschiedlichen Gewichts gelagert werden sollen, ohne daß für die unterschiedlichen Packungsarten verschiedene Auslösemechanismen verwendet werden sollen.

Aufgabe der Erfindung ist es daher, eine schnelle und zuverlässige Auslösevorrichtung zu schaffen, die für unterschiedlichste Arten von Stückgütern einsetzbar ist, ohne daß es einer Anpassung der mechanischen Bauteile an die jeweils gelagerten Stückgüter bedarf.

Diese Aufgabe wird erfindungsgemäß durch eine Auslösevorrichtung mit den Merkmalen des Patentanspruchs 1 oder eine mit den Merkmalen des Patentanspruchs 10 bzw. ein Lager mit den Merkmalen des Patentanspruchs 17 oder ein Verfahren zum Ausgeben wenigstens eines Stückguts aus einem Lagerschacht mit den Merkmalen des Patentanspruchs 19 gelöst.

Bei der Auslösevorrichtung zum Freigeben oder Sperren der Ausgabe wenigstens eines Stückguts aus einem Lagerschacht, der mehrere hintereinander liegende Stückgüter aufnehmen kann, die entlang einer Längsrichtung des Lagerschachts bewegt werden können, ist eine aus dem Lagerschacht herausfahrbare bzw. in den Lagerschacht hineinfahrbare Sperre mit einem elektromotorischen Antrieb derart verbunden, daß die Sperre sowohl beim Herausfahren zum Zwecke des Freigebens als auch beim Wieder-Hineinfahren zum Zwecke des Sperrens durch den elektromotorischen Antrieb derart geführt ist, daß die Geschwindigkeit sowohl des Herausfahrens als auch des wieder-Hineinfahrens der Sperre von der Bewegungsgeschwindigkeit des elektromotorischen Antriebs vorgegeben wird. Grundgedanke der Erfindung ist, daß die Sperre nicht nur beim Herausfahren von dem elektromotorischen Antrieb mit vorgegebener Geschwindigkeit geführt wird, sondern auch beim wieder-Hineinfahren, so daß nicht nur der Zeitpunkt, sondern auch die Geschwindigkeit des Wieder-Hineinfahrens der Sperre von der Bewegungsgeschwindigkeit des elektromotorischen Antriebs vorgegeben wird. Dadurch wird ein sicheres Wieder-Hineinfahren der Sperre zu einem gewünschten Zeitpunkt ermöglicht. Im Unterschied zum Stand der Technik, bei dem das Wieder-Hineinbewegen der Sperre von einer Federkraft und somit auch vom Gewicht des auf der Sperre aufliegenden, hinausrutschenden Stückguts abhängig ist, erfolgt das Wieder-Hineinfahren der Sperre bei der erfindungsgemäßen Vorrichtung nahezu unabhängig von den durch das aufliegende Stückgut einwirkenden Kräften. Dies wäre bei einer allein durch Federkraft hineinfahrenden Sperre nur mit Hilfe einer starken Feder möglich. Eine starke Federkraft hätte jedoch den Nachteil eines schlagartigen Hineinbewegens der Sperre, was zu unerwünschten schlagartigen Einwirkungen der Sperre auf hinausrutschende Stückgüter und einem Wegspringen oder Verkanten leichter Stückgüter führen könnte. Das Wieder-Hineinfahren der Sperre durch den elektromotorischen Antrieb gestattet dagegen sowohl ein sanftes als auch sicheres Hineinfahren der Sperre zu einem gewünschten Zeitpunkt.

Bei einer alternativen Ausführungsform der Auslösevorrichtung ist anstelle einer bewegbaren Sperre eine ortsfeste Barriere vorgesehen, wobei die an der Barriere anliegenden Stückgüter mittels einer Hebevorrichtung über die Barriere gehoben werden, das heißt, soweit angehoben werden, daß deren untere (dem Boden des Lagerschachts zugewandte) Vorderkante sich über die Oberkante der Barriere erhebt, so daß das Stückgut über die Barriere hinweg weiterrutschen kann. Hier ist die (zum Zwecke des Freigebens) in den Lagerschacht hineinfahrbare und (zum Sperren) aus dem Lagerschacht herausfahrbare Hebevorrichtung mit dem elektromotorischen Antrieb derart verbunden, daß die Hebevorrichtung sowohl beim Hineinfahren als auch beim Wieder-Herausfahren derart geführt ist, daß die Geschwindigkeit sowohl des Hineinfahrens als auch des Wieder-Herausfahrens von der Bewegungsgeschwindigkeit des Antriebs vorgegeben wird.

Bei einer vorteilhaften Weiterbildung der erfindungsgemäßen Auslösevorrichtung ist der elektromotorische Antrieb mit einer Steuereinrichtung gekoppelt, wobei die Steuereinrichtung so ausgebildet ist, daß die Geschwindigkeit des wieder-Hineinfahrens der Sperre (bzw. des Wieder-Herausfahrens der Hebevorrichtung) variiert werden kann. Dies gestattet ein Variieren der Hineinfahrgeschwindigkeit (bzw. Herausfahrgeschwindigkeit) in Abhängigkeit von den Abmessungen und dem Gewicht der auszulagernden und der in dem Lagerschacht verbleibenden Stückgüter. So kann nicht nur der Zeitpunkt des wieder-Hineinfahrens (bzw. Wieder-Herausfahrens) sondern auch der Bewegungsablauf in geeigneter weise gesteuert werden.

Bei einer Ausführungsform der Erfindung ist der elektromotorische Antrieb mit einer Steuereinrichtung gekoppelt, wobei die Steuereinrichtung wiederum mit Einrichtungen zum Erfassen der beiden Bewegungsendpositionen der Sperre (bzw. der Hebevorrichtung) gekoppelt ist, um in Abhängigkeit vom Erreichen der Bewegungsendpositionen den Antrieb abzuschalten. Gegenüber der alternativen Möglichkeit, die Sperre (bzw. die Hebevorrichtung) jeweils gegen eine Blockierung zu fahren und Antrieb dann aufgrund einer Strombegrenzung oder einer Zeitbegrenzung abzuschalten, hat diese Ausführungsform den Vorteil eines geringeren Energieverbrauchs und eines geringeren Verschleißes.

Bei einer bevorzugten Ausführungsform ist der elektromotorische Antrieb ein mit der Steuereinrichtung gekoppelter Servoantrieb, so daß der Stellweg und die Geschwindigkeit der Sperre (bzw. der Hebevorrichtung) steuerbar sind. Der Servoantrieb ermöglicht es, daß die Steuereinrichtung eine Rückmeldung über die jeweils erreichte Position erhält. Vorzugsweise wird als Servoantrieb ein Servomotor mit einer rotierenden Achse verwendet, wobei auf der Achse ein Hebel befestigt ist, der die Sperre (bzw. die Hebevorrichtung) betätigt. Hierbei kann der Servomotor zusätzlich ein die Rotationsgeschwindigkeit der Achse verringerndes Getriebe enthalten. Vorzugsweise werden preiswerte Servomotoren verwendet, wie sie aus dem Modellbau bekannt sind. Dies gestattet die Herstellung preiswerter Auslösevorrichtungen, so daß viele Lagerschächte jeweils mit separaten Auslösevorrichtungen bei geringen Kosten versehen werden können.

Die in den Lagerschacht hineinfahrbare und aus dem Lagerschacht herausfahrbare sperre kann eine vielzahl von bekannten Bauformen annehmen. Sie kann beispielsweise in den Lagerschacht von unten nach oben oder von einer Seite aus einschwenken und zur Freigabe eines Stückguts wieder hinausschwenken. Vorzugsweise fährt sie jedoch quer zur Längsrichtung des Lagerschachts in diesen hinein. Bei einer vorteilhaften Ausführungsform umfaßt die Sperre einen Haltefinger, der quer zur Längsrichtung des Lagerschachts bewegbar (z.B. einschwenkbar) ist. Dieser Haltefinger bewegt sich beispielsweise aus dem Boden des Lagerschachts heraus in den Lagerschacht hinein.

Wird eine Hebevorrichtung eingesetzt, so umfaßt diese vorzugsweise eine vom Boden des Lagerschachts nach oben schwenkbare oder biegbare Platte oder Zunge, die so im Boden des Lagerschachts angeordnet ist, daß ein stoßfreier Übergang für nachrutschende Stückgüter gewährleistet ist.

Weitere vorteilhafte und/oder bevorzugte Weiterbildungen der erfindungsgemäßen Auslösevorrichtung sind in den Unteransprüchen gekennzeichnet.

Das erfindungsgemäße Lager zum Lagern von Stückgütern weist eine vielzahl von Lagerschächten auf, wobei an jedem Lagerschacht eine Auslösevorrichtung einer der oben genannten Arten befestigt ist. Vorzugsweise sind die Lagerschächte mit den daran befestigten Auslösevorrichtungen jeweils als separate Module aufgebaut. Dies gestattet eine flexible Gestaltung der gesamten Lageranordnung. Die Module enthalten neben den Wandungen und Führungselementen der Lagerschächte und der Auslösevorrichtung vorzugsweise einheitliche elektrische Schnittstellen, mit denen sie nach ihrer mechanischen Montage elektrisch an ein Bussystem anschließbar sind.

Bei dem erfindungsgemäßen Verfahren zum Ausgeben wenigstens eines Stückguts aus einem Lagerschacht, der mehrere in Längsrichtung hintereinander liegende Stückgüter enthält, wird zunächst eine Kraft erzeugt, die die mehreren Stückgüter gegen eine an einem Ende in den Lagerschacht hineinragende Sperre einer Auslösevorrichtung drückt. Diese Kraft wird beispielsweise bei einem geneigten Lagerschacht durch die Schwerkraft der Stückgüter bewirkt. Denkbar ist auch eine Krafterzeugung durch eine federbelastete Schiebevorrichtung oder durch Reibungskraft eines im Schacht umlaufenden Transportbands. Die Sperre ist mit einem elektromotorischen Antrieb verbunden. Bei dem Verfahren wird der elektromotorische Antrieb zunächst derart bewegt, daß die Sperre aus dem Lagerschacht herausgefahren wird, wodurch die in dem Lagerschacht befindlichen Stückgüter bewegt werden, so daß eines oder mehrere Stückgüter an einem Schachtende austreten. Die Geschwindigkeit des Herausfahrens der Sperre wird von der Bewegungsgeschwindigkeit des elektromotorischen Antriebs vorgegeben. Dann wird während der Bewegung der Stückgüter der elektromotorische Antrieb derart bewegt, daß die Sperre wieder in den Lagerschacht hineingefahren wird, wobei die Geschwindigkeit des Wieder-Hineinfahrens wiederum von der Bewegungsgeschwindigkeit des elektromotorischen Antriebs vorgegeben wird. Dabei tritt das Stückgut oder treten die Stückgüter, die bereits ganz oder teilweise den Ort des Lagerschachts, an dem die Sperre hineingefahren wird, passiert haben, aus dem Lagerschacht aus, während nachfolgende Stückgüter an der Sperre gehalten werden. Wesentlich bei dem erfindungsgemäßen Verfahren ist, daß nicht nur die Geschwindigkeit des Herausfahrens der Sperre von der Bewegungsgeschwindigkeit des elektromotorischen Antriebs vorgegeben wird, sondern auch die Geschwindigkeit des Wieder-Hineinfahrens. Dies gestattet ein sanftes Wieder-Hineinfahren der Sperre und sicheres Halten der nachrutschenden Stückgüter, beispielsweise von Arzneimittelpackungen und/oder Flaschen.

Bei einer bevorzugten Weiterbildung des erfindungsgemäßen Verfahrens werden Eigenschaften der im Lagerschacht befindlichen Stückgüter vor deren Einlagerung in den Lagerschacht erfaßt und in Zuordnung zum jeweiligen Lagerschacht und zu der Position der Stückgüter in dem Lagerschacht in einer Steuereinrichtung gespeichert. Dann werden der Zeitpunkt des Wieder-Hineinfahrens der Sperre und die Bewegungsgeschwindigkeit des elektromotorischen Antriebs beim Wieder-Hineinfahren der Sperre durch die Steuereinrichtung in Abhängigkeit von den erfaßten Eigenschaften der auszulagernden und der im Lagerschacht verbleibenden Stückgüter gesteuert. Beispielsweise umfassen die erfaßten Eigenschaften die Abmessungen der Stückgüter in Längsrichtung des Lagerschachts, die Gewichte der Stückgüter und/oder die Gleiteigenschaften der Oberflächen der Stückgüter. Der Zeitpunkt des Wieder-Hineinfahrens der Sperre wird beispielsweise so gesteuert, daß die Sperre bei längeren Stückgütern erst zu einem späteren Zeitpunkt nach dem Hinausfahren wieder hineingefahren wird. Bei einem geneigten Lagerschacht, bei dem die Auflageflächen der Stückgüter bekannte Gleiteigenschaften aufweisen, wird der Zeitpunkt des Wieder-Hineinfahrens der Sperre beispielsweise von einer prognostizierten Gleitgeschwindigkeit des nachrutschenden Stapels der Stückgüter bestimmt, wobei die prognostizierte Gleitgeschwindigkeit in Abhängigkeit von den Gewichten und den Gleiteigenschaften der Oberflächen der nachrutschen Stückgüter bestimmt wird.

Vorteilhafte und/oder bevorzugte Weiterbildungen des erfindungsgemäßen Verfahrens sind in den Unteransprüchen gekennzeichnet.

Im folgenden wird die Erfindung anhand eines in den zeichnungen dargestellten bevorzugten Ausführungsbeispiels näher erläutert. In den Zeichnungen zeigen:
Fig. 1 eine Seitenschnittansicht einer Ausführungsform der Auslösevorrichtung, die in einer Aufnahmeschiene unterhalb eines Lagerschachts montiert ist; und
Fig. 2 einen Detailausschnitt der in Fig. 1 gezeigten Schnittansicht.

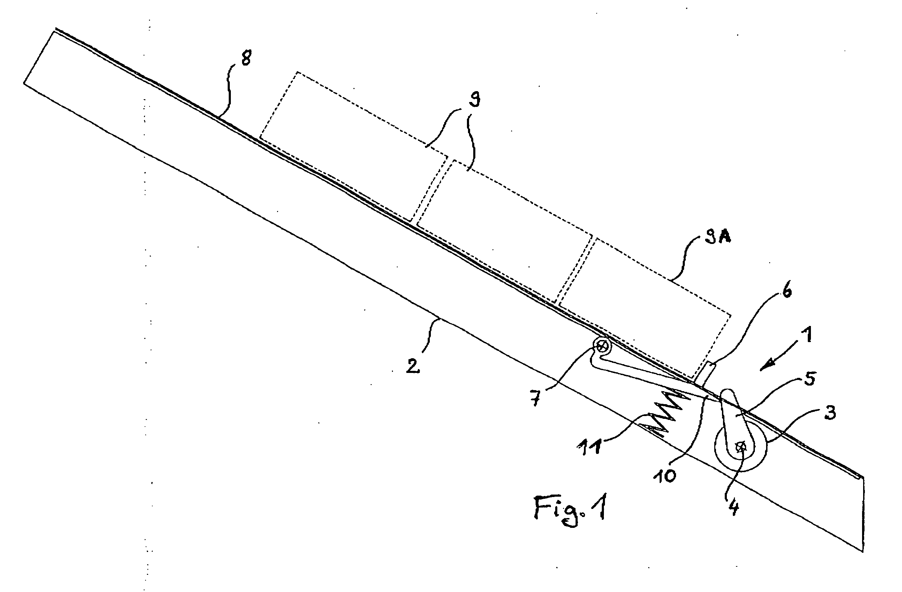

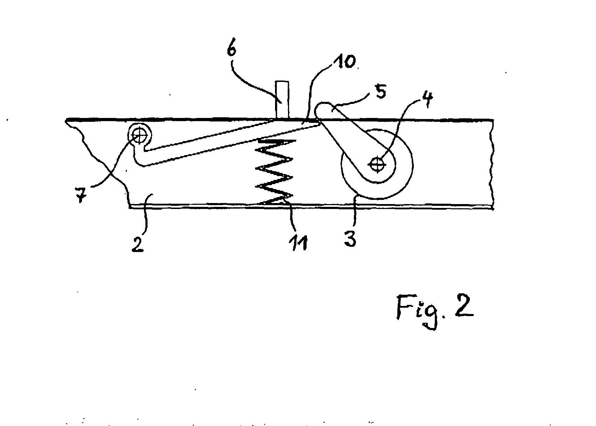

In den Figuren 1 und 2 sind schematische Seitenansichten einer Ausführungsform der erfindungsgemäßen Auslösevorrichtung 1 gezeigt, die in eine Aufnahmeschiene 2 montiert und unterhalb eines Bodens 8 eines Lagerschachts angeordnet ist. In Fig. 1 sind mit gestrichtelten Linien die auf dem Boden 8 des Lagerschachts aufliegenden Stückgüter 9 (Arzneimittelpackungen) dargestellt. Die Aufnahmeschiene 2 hat die Form eines nach oben offenen U-Profils, wobei an einem Ende der Aufnahmeschiene 2 die Auslösevorrichtung 1 in das U-Profil derart eingebaut ist, daß ein Haltefinger 6 der Auslösevorrichtung 1 nach oben aus dem U-Profil der Aufnahmeschiene 2 herausragt. Die Aufnahmeschiene 2 mit eingebauter Auslösevorrichtung 1 wird unter den Boden 8 eines Lagerschachts derart montiert, daß der Haltefinger 6 durch eine Öffnung in dem Boden 8 des Lagerschachts hindurch von unten in den Lagerschacht hineinragt. Der Haltefinger 6 verhindert ein Hinabrutschen der anliegenden Packung 9A und der nachfolgenden Packungen 9. In das U-Profil der Aufnahmeschiene 2 können Zuleitungen und Bauelemente einer Steuerelektronik aufgenommen sein. Diese sind in den Figuren nicht gezeigt.

Die Auslösevorrichtung 1 weist einen Servomotor 3 auf, der über einen Hebelmechanismus den Haltefinger 6 bewegt. Der Servomotor 3 weist eine Antriebswelle 4 auf, auf der ein Hebel 5 befestigt ist. Der Hebel 5 wirkt auf einen vorsprung 10 des um eine Schwenkachse 7 schwenkbaren Haltefingers 6 ein, wobei der schwenkbare Haltefinger 6 durch eine Feder 11 gegen den Hebel 5 gepreßt wird. Die Anordnung von Andruckfeder 11, schwenkbarem Haltefinger 6 und Hebel 5 ist so gewählt, daß der Haltefinger 6 jeder Bewegung des Hebels 5 um die Drehachse der Antriebswelle 4 folgt. Dreht sich die Antriebswelle 4 entgegen dem Uhrzeigersinn, so drückt der Hebel 5 den Haltefinger 6 gegen die Federkraft nach unten, so daß der Haltefinger 6 aus dem Lagerschacht herausgefahren wird. Wenn anschließend die Antriebswelle 4 im Uhrzeigersinn zurückgedreht wird und sich der Hebel 5 wieder nach oben bewegt, so drückt die Feder 11 den Haltefinger 6 ebenfalls gegen den Hebel 5 nach oben, so daß der Haltefinger 6 (dem Hebel 5 folgend) wieder in den Lagerschacht hineingefahren wird. Bei beiden Bewegungsrichtungen wird erfindungsgemäß die Bewegungsgeschwindigkeit von der Rotationsgeschwindigkeit der Antriebswelle 4 vorgegeben.

## Patentansprüche

1. Auslösevorrichtung (1) zum Freigeben oder Sperren der Ausgabe wenigstens eines Stückguts aus einem Lagerschacht, der mehrere hintereinander liegende Stückgüter aufnehmen kann, die entlang einer Längsrichtung des Lagerschachts bewegt werden können,
wobei sich die Auslösevorrichtung (1) an demjenigen Ende des Lagerschachts befindet, an der das wenigstens eine Stückgut ausgegeben werden soll, und
wobei die Auslösevorrichtung eine aus dem Lagerschacht herausfahrbare bzw. wieder in den Lagerschacht hineinfahrbare Sperre (6) aufweist, **dadurch gekennzeichnet, dass** die Sperre mit einem elektromotorischen Antrieb (3) derart verbunden ist, daß die Sperre sowohl beim Herausfahren zum zwecke des Freigebens als auch beim Wieder-Hineinfahren zum zwecke des Sperrens durch den elektromotorischen Antrieb derart geführt ist, daß die Geschwindigkeit sowohl des Herausfahrens als auch des Wieder-Hineinfahrens von der Bewegungsgeschwindigkeit des elektromotorischen Antriebs vorgegeben wird.

2. Auslösevorrichtung nach Anspruch 1, **dadurch gekennzeichnet, daß** die Sperre sowohl beim Hineinfahren als auch beim Herausfahren zwangsgeführt ist.

3. Auslösevorrichtung nach Anspruch 1, **dadurch gekennzeichnet, daß** die Sperre in einer Bewegungsrichtung von einer Feder vorgespannt ist und der Antrieb gegen die Federkraft drückt.

4. Auslösevorrichtung nach Anspruch 3, **dadurch gekennzeichnet, daß** die Federkraft die Sperre in den Lagerschacht hinein drückt.

5. Auslösevorrichtung nach einem der Ansprüche 1 - 4, **dadurch gekennzeichnet, daß** der elektromotorische Antrieb mit einer Steuereinrichtung gekoppelt ist, wobei die Steuereinrichtung so ausgebildet ist, daß die Geschwindigkeit des wieder-Hineinfahrens der Sperre variiert werden kann.

6. Auslösevorrichtung nach einem der Ansprüche 1 - 5, **dadurch gekennzeichnet, daß** der elektromotorische Antrieb mit einer Steuereinrichtung gekoppelt ist, wobei die Steuereinrichtung mit Einrichtungen zum Erfassen der beiden Bewegungsendpositionen der Sperre gekoppelt ist, um in Abhängigkeit vom Erreichen der Bewegungsendpositionen den Antrieb abzuschalten.

7. Auslösevorrichtung nach einem der Ansprüche 1-5, **dadurch gekennzeichnet, daß** der elektromotorische Antrieb ein mit einer Steuereinrichtung gekoppelter Servoantrieb ist, so daß der Stellweg und die Geschwindigkeit der Sperre steuerbar sind.

8. Auslösevorrichtung nach Anspruch 7, **dadurch gekennzeichnet, daß** der Servoantrieb ein Servomotor (3) mit einer rotierenden Achse (4) ist, wobei auf der Achse (4) ein Hebel (5) befestigt ist, der die Sperre betätigt.

9. Auslösevorrichtung nach einem der Ansprüche 1 - 8, **dadurch gekennzeichnet, daß** die Sperre einen Haltefinger umfaßt, der quer zur Längsrichtung des Lagerschachts bewegbar ist.

10. Auslösevorrichtung (1) zum Freigeben oder Sperren der Ausgabe wenigstens eines Stückguts aus einem Lagerschacht, der mehrere hintereinander liegende Stückgüter aufnehmen kann, die entlang einer Längsrichtung des Lagerschachts bewegt werden können,
wobei sich die Auslösevorrichtung (1) an demjenigen Ende des Lagerschachts befindet, an der das wenigstens eine stückgut ausgegeben werden soll, und
wobei die Auslösevorrichtung eine den Lagerschacht unten begrenzende Barriere, die ein Weiterrutschen des anliegenden Stückguts verhindert, und eine in den Lagerschacht hineinfahrbare und wieder aus dem Lagerschacht herausfahrbare Hebevorrichtung zum Heben eines anliegenden Stückguts über die Barriere aufweist, **dadurch gekennzeichnet, dass** die Hebevorrichtung mit einem elektromotorischen Antrieb (3) derart verbunden ist, daß die Hebevorrichtung sowohl beim Hineinfahren zum Zwecke des Freigebens als auch beim Wieder-Herausfahren zum Zwecke des Sperrens durch den elektromotorischen Antrieb derart geführt ist, daß die Geschwindigkeit sowohl des Hineinfahrens als auch des Wieder-Herausfahrens von der Bewegungsgeschwindigkeit des elektromotorischen Antriebs vorgegeben wird.

11. Auslösevorrichtung nach Anspruch 10, **dadurch gekennzeichnet, daß** die Hebevorrichtung einen schwenkbaren Abschnitt des Lagerschachtbodens umfaßt.

12. Auslösevorrichtung nach Anspruch 10 oder 11, **dadurch gekennzeichnet, daß** die Hebevorrichtung in einer Bewegungsrichtung von einer Feder vorgespannt ist und der Antrieb gegen die Federkraft drückt.

13. Auslösevorrichtung nach einem der Ansprüche 10 - 12, **dadurch gekennzeichnet, daß** der elektromotorische Antrieb mit einer Steuereinrichtung gekoppelt ist, wobei die Steuereinrichtung so ausgebildet ist, daß die Geschwindigkeit des Wieder-Herausfahrens der Hebevorrichtung variiert werden kann.

14. Auslösevorrichtung nach einem der Ansprüche 10 -13, **dadurch gekennzeichnet, daß** der elektromotorische Antrieb mit einer Steuereinrichtung gekoppelt ist, wobei die Steuereinrichtung mit Einrichtungen zum Erfassen der beiden Bewegungsendpositionen der Hebevorrichtung gekoppelt ist, um in Abhängigkeit vom Erreichen der Bewegungsendpositionen den Antrieb abzuschalten.

15. Auslösevorrichtung nach einem der Ansprüche 10 - 13, **dadurch gekennzeichnet, daß** der elektromotorische Antrieb ein mit einer Steuereinrichtung gekoppelter Servoantrieb ist, so daß der Stellweg und die Geschwindigkeit der Hebevorrichtung steuerbar sind.

16. Auslösevorrichtung nach einem der Ansprüche 1 - 15, **dadurch gekennzeichnet, daß** der Lagerschacht geneigt ist, so daß er zu dem Ende hin abfällt, an der die Auslösevorrichtung befestigt ist.

17. Lager zum Lagern von Stückgütern, mit einer Vielzahl von Lagerschächten,
wobei an jedem Lagerschacht eine Auslösevorrichtung nach einem der Ansprüche 1 - 16 befestigt ist.

18. Lager nach Anspruch 17, **dadurch gekennzeichnet, daß** die Lagerschächte mit daran befestigten Auslösevorrichtungen jeweils als Module aufgebaut sind.

19. verfahren zum Ausgeben wenigstens eines Stückguts aus einem Lagerschacht, der mehrere in Längsrichtung hintereinander liegende Stückgüter enthält, wobei
(a) eine Kraft erzeugt wird, die die mehreren Stückgüter gegen eine an einem Ende in den Lagerschacht hineinragende Sperre einer Auslösevorrichtung drückt,
wobei die Sperre mit einem elektromotorischen Antrieb verbunden ist,
(b) der elektromotorische Antrieb derart bewegt wird, daß die Sperre aus dem Lagerschacht herausgefahren wird, so daß die in dem Lagerschacht befindlichen Stückgüter bewegt werden, so daß eines oder mehrere Stückgüter aus dem Schacht austreten, wobei die Geschwindigkeit des Herausfahrens von der Bewegungsgeschwindigkeit des elektromotorischen Antriebs vorgegeben wird, und
(c) während der Bewegung der Stückgüter in Schritt (b) der elektromotorische Antrieb derart bewegt wird, daß die Sperre wieder in den Lagerschacht hineingefahren wird, wobei die Geschwindigkeit des wieder-Hineinfahrens von der Bewegungsgeschwindigkeit des elektromotorischen Antriebs vorgegeben wird,
wobei das oder die Stückgüter, die bereits ganz oder teilweise den Ort des Lagerschachts, an dem die Sperre hineingefahren wird, passiert haben, aus dem Lagerschacht austreten, während nachfolgende Stückgüter an der Sperre gehalten werden.

20. Verfahren nach Anspruch 19, **dadurch gekennzeichnet, daß** Eigenschaften der im Lagerschacht befindlichen Stückgüter vor deren Einlagerung in den Lagerschacht erfaßt und in Zuordnung zum Lagerschacht und zur Position der Stückgüter im Lagerschacht in einer Steuereinrichtung gespeichert werden, wobei der Zeitpunkt des Wieder-Hineinfahrens der Sperre und die Bewegungsgeschwindigkeit des elektromotorischen Antriebs beim Wieder-Hineinfahren der Sperre durch die Steuereinrichtung in Abhängigkeit von den erfaßten Eigenschaften der auszulagernden und der im Lagerschacht verbleibenden Stückgüter gesteuert werden.

21. Verfahren nach Anspruch 20, **dadurch gekennzeichnet, daß** die Eigenschaften die Abmessungen der Stückgüter in der Längsrichtung des Lagerschachts umfassen.

22. Verfahren nach Anspruch 20 oder 21, **dadurch gekennzeichnet, daß** die Eigenschaften die Gewichte der Stückgüter umfassen.

23. Verfahren nach einem der Ansprüche 20 bis 22, **dadurch gekennzeichnet, daß** die Eigenschaften die Gleiteigenschaften der Oberfläche der Stückgüter umfassen.

## Claims

1. Triggering device (1) for enabling or disabling the dispensing of at least one individual article from a magazine which can accommodate a plurality of individual articles lying one behind the other which can be moved along a longitudinal direction of the magazine, wherein the triggering device (1) is located at the end of the magazine at which the at least one individual article is to be dispensed, and wherein the triggering device has a stop (6) which can be extended out of the magazine or retracted again into the magazine, **characterised in that** the stop is connected to an electric motor drive (3) in such a way that the stop is guided by the electric motor drive both during extension for the purpose of enabling dispensing and during retraction for the purpose of disabling dispensing in such a way the speed of both extending and also retracting is predetermined by the speed of movement of the electric motor drive.

2. Triggering device as claimed in Claim 1, **characterised in that** the stop is forcibly guided both during retraction and also during extension.

3. Triggering device as claimed in Claim 1, **characterised in that** the stop is biased in one direction of movement by a spring and the drive pushes against the spring force.

4. Triggering device as claimed in Claim 3, **characterised in that** the spring force pushes the stop into the magazine.

5. Triggering device as claimed in any one of Claims 1 to 4, **characterised in that** the electric motor drive is coupled to a control device, the control device being constructed in such a way that the speed of retraction of the stop can be varied.

6. Triggering device as claimed in any one of Claims 1 to 5, **characterised in that** the electric motor drive is coupled to a control device, wherein the control device is coupled to means for detecting the end positions of the movement of the stop in order to switch off the drive as a function of the drive reaching the end position of its movement.

7. Triggering device as claimed in any one of Claims 1 to 5, **characterised in that** the electric motor drive is a servo drive which is coupled to a control device so that the regulating distance and the speed of the stop are controllable.

8. Triggering device as claimed in Claim 7, **characterised in that** the servo drive is a servo motor (3) with a rotating shaft (4), wherein a lever (5) which actuates the stop is fixed on the shaft (4).

9. Triggering device as claimed in any one of Claims 1 to 8, **characterised in that** the stop comprises a retaining finger which is movable transversely with respect to the longitudinal direction of the magazine.

10. Triggering device (1) for enabling or disabling the dispensing of at least one individual article from a magazine which can accommodate a plurality of individual articles lying one behind the other which can be moved along a longitudinal direction of the magazine, wherein the triggering deice (1) is located at the end of the magazine at which the at least one individual article is to be dispensed, and wherein the triggering device has a barrier which delimits the bottom of the magazine and prevents the abutting individual article from sliding further, and a lifting device which be retracted into the magazine and extended out of the magazine again for lifting an abutting individual article over the barrier, **characterised in that** the lifting device is connected to an electric motor drive (3) in such a way that both during retraction for the purpose of releasing dispensing and also during extension for the purpose of disabling dispensing the lifting device is guided by the electric motor drive in such a way that the speed of both retraction and also extension is predetermined by the speed of movement of the electric motor drive.

11. Triggering device as claimed in Claim 10, **characterised in that** the lifting device comprises a pivotable portion of the magazine base.

12. Triggering device as claimed in Claim 10 or 11, **characterised in that** the lifting device is biased in a direction of movement by a spring and the drive pushes against the spring force.

13. Triggering device as claimed in any one of Claims 10 to 12, **characterised in that** the electric motor drive is coupled to a control device, the control device being constructed so that the sped of extending the lifting device again can be varied.

14. Triggering device as claimed in any one of Claims 10 to 13, **characterised in that** the electric motor drive is coupled to a control device, wherein the control device is coupled to means for detecting the two end positions of the movement of the lifting device in order to switch off the drive as a function of reaching the end positions of the movement.

15. Triggering device as claimed in any one of Claims 10 to 13, **characterised in that** the electric motor drive is a servo drive coupled to a control device so that the regulating distance and the speed of the lifting device are controllable.

16. Triggering device as claimed in any one of Claims 1 to 15, **characterised in that** the magazine is inclined so that it slopes down towards the end on which the triggering device is fixed.

17. Storage device for storing individual articles, with a plurality of magazines, wherein a triggering device as claimed in any one of Claims 1 to 16 is fixed on each magazine.

18. Storage device as claimed in Claim 17, **characterised in that** the magazines with triggering devices fixed thereon are each constructed as modules.

19. Method of dispensing at least one individual article from a magazine which contains a plurality of individual articles lying one behind the other in the longitudinal direction, wherein
(a) a force is generated which pushes the plurality of individual articles against a stop of a triggering device, which stop protrudes into the magazine, the stop being connected to an electric motor drive,
(b) the electric motor drive is moved in such a way that the stop is extended out of the magazine, so that the individual articles located in the magazine are moved so that one or several individual articles come out of the magazine, wherein the speed of extension is predetermined by the speed of movement of the electric motor drive, and
(c) during the movement of the individual articles in step (b) the electric motor drive is moved in such a way that the stop is retracted into the magazine again, wherein the speed of retraction is predetermined by the speed of movement of the electric motor drive, wherein the individual article or articles, which have already completely or partially passed the location of the magazine at which the stop is retracted, emerge from the magazine, whilst subsequent individual articles are retained on the stop.

20. Method as claimed in Claim 19, **characterised in that** properties of the individual articles located in the magazine are detected before they are stored in the magazine and are stored in a control device in co-ordination with the magazine and the position of the individual articles in the magazine, wherein the time at which the stop is retracted again and the speed of movement of the electric motor drive when the stop is retracted again are controlled by the control device as a function of the detected properties of the individual articles which are to be removed and which remain in the magazine.

21. Method as claimed in Claim 20, **characterised in that** the properties comprise the dimensions of the individual articles in the longitudinal direction of the magazine.

22. Method as claimed in Claim 20 or Claim 21, **characterised in that** the properties comprise the weights of the individual articles.

23. Method as claimed in any one of Claims 20 to 22, **characterised in that** the properties comprise the anti-friction properties of the surface of the individual articles.

## Revendications

1. Dispositif déclencheur (1) pour libérer ou bloquer la délivrance d'au moins un article d'un puits de stockage qui peut recevoir plusieurs articles agencés les uns derrière les autres et qui peuvent être déplacés dans une direction longitudinale du puits de stockage,
dans lequel le dispositif déclencheur (1) se trouve à l'extrémité du puits de stockage où le au moins un article doit être délivré, et
dans lequel le dispositif déclencheur présente un arrêt (6) qui peut être extrait du puits de stockage et réinséré dans celui-ci, **caractérisé en ce que** l'arrêt est connecté à un entraînement (3) à moteur électrique de sorte que l'arrêt soit guidé par l'entraînement à moteur électrique autant lors de son extraction à des fins de libération que lors de sa réinsertion à des fins de blocage, de sorte que la vitesse autant de l'extraction que de la réinsertion soit prédéterminée par la vitesse de déplacement de l'entraînement à moteur électrique.

2. Dispositif déclencheur selon la revendication 1, **caractérisé en ce que** l'arrêt est guidé à force autant lors de son extraction que de sa réinsertion.

3. Dispositif déclencheur selon la revendication 1,
**caractérisé en ce que** l'arrêt est précontraint dans une direction de déplacement par un ressort et l'entraînement opère à l'encontre de la force du ressort.

4. Dispositif déclencheur selon la revendication 3, **caractérisé en ce que** la force du ressort presse l'arrêt dans le puits de stockage.

5. Dispositif déclencheur selon l'une quelconque des revendications 1 à 4, **caractérisé en ce que** l'entraînement à moteur électrique est couplé à un dispositif de commande, le dispositif de commande étant conçu de manière à pouvoir faire varier la vitesse de réinsertion de l'arrêt.

6. Dispositif déclencheur selon l'une quelconque des revendications 1 à 5, **caractérisé en ce que** l'entraînement à moteur électrique est couplé à un dispositif de commande, le dispositif de commande étant couplé à des dispositifs de saisie des deux positions finales de déplacement de l'arrêt pour déconnecter l'entraînement en fonction de l'arrivée aux positions finales de déplacement.

7. Dispositif déclencheur selon l'une quelconque des revendications 1 à 5, **caractérisé en ce que** l'entraînement par moteur électrique est une servocommande couplée à un dispositif de commande de manière à pouvoir commander le parcours de réglage et la vitesse de l'arrêt.

8. Dispositif déclencheur selon la revendication 7, **caractérisé en ce que** la servocommande est un servomoteur (3) avec un axe rotatif (4), dans lequel est fixé sur l'axe (4) un levier (5) actionnant l'arrêt.

9. Dispositif déclencheur selon l'une quelconque des revendications 1 à 8, **caractérisé en ce que** l'arrêt comprend un doigt de retenue qui peut se déplacer transversalement à la direction longitudinale du puits de stockage.

10. Dispositif déclencheur (1) pour libérer ou bloquer la délivrance d'au moins un article d' un puits de stockage qui peut recevoir plusieurs articles agencés les uns derrière les autres et qui peuvent être déplacés dans une direction longitudinale du puits de stockage,
dans lequel le dispositif déclencheur (1) se trouve à l'extrémité du puits de stockage où le au moins un article doit être délivré, et
dans lequel le dispositif déclencheur présente une barrière limitant le puits de stockage vers le bas, qui empêche l'article adjacent de continuer à glisser et un dispositif de levage pouvant être inséré dans le puits de stockage et en être extrait pour soulever un article adjacent au-dessus de la barrière, **caractérisé en ce que** le dispositif de levage est connecté à un entraînement à moteur électrique (3) de sorte que le dispositif de levage soit guidé par l'entraînement à moteur électrique autant lors de l'insertion à des fins de libération que lors de la réextraction à des fins de blocage de sorte que la vitesse autant de l'insertion que de la réextraction soit prédéterminée par la vitesse de déplacement de l'entraînement à moteur électrique.

11. Dispositif déclencheur selon la revendication 10, **caractérisé en ce que** le dispositif de levage comprend une section pivotante du fond du puits de stockage.

12. Dispositif déclencheur selon la revendication 10 ou 11, **caractérisé en ce que** le dispositif de levage est précontraint par un ressort dans une direction de déplacement et l'entraînement opère à l'encontre de la force du ressort.

13. Dispositif déclencheur selon l'une quelconque des revendications 10 à 12, **caractérisé en ce que** l'entraînement à moteur électrique est couplé à un dispositif de commande, le dispositif de commande étant conçu de manière à pouvoir faire varier la vitesse de réextraction du dispositif de levage.

14. Dispositif déclencheur selon l'une quelconque des revendications 10 à 13, **caractérisé en ce que** l'entraînement à moteur électrique est couplé à un dispositif de commande, le dispositif de commande étant couplé à des dispositifs de saisie des deux positions finales de déplacement du dispositif de levage pour déconnecter l'entraînement en fonction de l'arrivée aux positions finales de déplacement.

15. Dispositif déclencheur selon l'une quelconque des revendications 10 à 13, **caractérisé en ce que** l'entraînement à moteur électrique est une servocommande couplée à un dispositif de commande de manière à pouvoir commander le parcours de réglage et la vitesse du dispositif de levage.

16. Dispositif déclencheur selon l'une quelconque des revendications 1 à 15, **caractérisé en ce que** le puits de stockage est incliné de sorte qu'il descende en pente vers l'extrémité où est fixé le dispositif déclencheur.

17. Magasin de stockage d'articles, ayant une pluralité de puits de stockage,
dans lequel un dispositif déclencheur selon l'une quelconque des revendications 1 à 16 est fixé à chaque puits de stockage.

18. Magasin selon la revendication 17, **caractérisé en ce que** les puits de stockage avec les dispositifs déclencheurs qui leur sont fixés sont respectivement construits sous la forme de modules.

19. Procédé de délivrance d'au moins un article d'un puits de stockage, qui contient de multiples articles situés les uns derrière les autres en direction longitudinale, dans lequel
(a) il est généré une force qui presse les multiples articles contre un arrêt d'un dispositif déclencheur dépassant à une extrémité dans le puits de stockage,
dans lequel l'arrêt est connecté à un entraînement à moteur électrique,
(b) l'entraînement à moteur électrique est déplacé de sorte que l'arrêt soit extrait du puits de stockage afin de déplacer les articles se trouvant dans le puits de stockage de manière à sortir un ou plusieurs articles du puits, la vitesse de la sortie étant prédéterminée par la vitesse de déplacement de l'entraînement à moteur électrique, et
(c) pendant le déplacement des articles à l'étape (b), l'entraînement à moteur électrique est déplacé de manière que l'arrêt soit réinséré dans le puits de stockage, la vitesse de réinsertion étant prédéterminée par la vitesse de déplacement de l'entraînement à moteur électrique, dans lequel le ou les articles, qui est ou sont déjà passé entièrement ou partiellement par l'endroit du puits de stockage où l'arrêt est inséré, est ou sont extraits du puits de stockage, tandis que les articles suivants sont maintenus sur l'arrêt.

20. Procédé selon la revendication 19, **caractérisé en ce que** les propriétés des articles se trouvant dans le puits de stockage sont saisies avant leur stockage dans le puits de stockage et sont mémorisées dans un dispositif de commande en fonction du puits de stockage et de la position des articles dans le puits de stockage, dans lequel le moment de réinsertion de l'arrêt et la vitesse de déplacement de l'entraînement à moteur électrique sont commandés par le dispositif de commande lors de la réinsertion de l'arrêt en fonction des propriétés saisies des articles à transférer et des articles restant dans le puits de stockage.

21. Procédé selon la revendication 20, **caractérisé en ce que** les propriétés comprennent les dimensions des articles dans la direction longitudinale du puits de stockage.

22. Procédé selon les revendication 20 ou 21, **caractérisé en ce que** les propriétés comprennent les poids des articles.

23. Procédé selon l'une quelconque des revendications 20 à 22, **caractérisé en ce que** les propriétés comprennent les propriétés de glissement de la surface des articles.
